# FASCICULE DE BREVET EUROPEEN

(11) **EP 0 527 670 B1**
(45) Date de publication et mention de la délivrance du brevet: **04.11.1998**
(21) Numéro de dépôt: 92402224.7
(22) Date de dépôt: 04.08.1992
(51) Int. Cl.: G11B 11/10, G11B 7/12

(54) **Tête de lecture magnéto-optique**
Magnetooptischer Lesekopf
Magneto-optical read head

(30) Priorité: 09.08.1991 FR 9110177
(43) Date de publication de la demande: 17.02.1993
(60) Demande divisionnaire: 98101724.7
(73) Titulaire: THOMSON-CSF, 75008 Paris (FR)
(72) Inventeur: Lehureau, Jean-Claude, F-92045 Paris la Défense (FR); Maillot, Christian, F-92045 Paris la Défense (FR)
(74) Mandataire: Guérin, Michel

(56) Documents cités:
- EP-A- 0 436 424
- US-A- 4 618 901
- US-A- 4 943 131
- PATENT ABSTRACTS OF JAPAN vol. 10, no. 89 (P-444)8 Avril 1986
- SOVIET PATENTS ABSTRACTS Section EI, Week 9035, 10 Octobre 1990 Derwent Publications Ltd., London, GB; Class T03, AN 90-2266840

## Description

L'invention concerne la lecture optique sur un support d'enregistrement magnétique.

Le principe général de l'effet magnéto-optique (effet Kerr ou Faraday) est le suivant : une couche mince de matériau magnétique, éclairée par un faisceau lumineux, modifie les propriétés de ce faisceau d'une manière qui dépend de la polarisation magnétique de la couche.

Par conséquent, l'écriture d'informations sur une bande magnétique est une écriture magnétique, mais la lecture est optique.

La modification du faisceau lumineux peut être de nature diverse : modification du coefficient de réflexion, introduction d'un retard variable de phase optique, ou encore variation du plan de polarisation d'une lumière polarisée. C'est ce dernier phénomène qui est le plus facile à utiliser.

En pratique on ne peut pas lire directement par un faisceau optique les informations magnétiques inscrites sur la bande. On utilise un transducteur magnéto-optique, qui constitue la tête de lecture du système. Ce transducteur comporte une couche magnétique mince pouvant donner lieu à un effet magnéto-optique. La bande qui porte des informations magnétiques défile à proximité immédiate de la tête et induit des modifications de flux magnétique dans la couche mince de la tête. C'est sur cette couche mince et non pas sur la bande qu'est dirigé un faisceau laser de lecture.

Un système de lecture magnéto-optique connu de EP-A- 436424 est construit comme cela est représenté de manière schématique à la figure 1 : une source lumineuse 10 (de préférence une diode laser à semiconducteur) émet un faisceau 12 qui est collimaté par un collimateur 14 et focalisé par une lentille 16 sur la tête de lecture 18, et en particulier sur la couche mince magnéto-optique située à proximité de la bande magnétique 20 à lire. Le faisceau est réfléchi par la couche mince, et le plan de polarisation de la lumière réfléchie subit une rotation qui dépend de la polarisation magnétique de la couche mince. Cette polarisation magnétique dépend elle-même du sens de polarisation magnétique de la portion de bande qui est en train de passer devant la tête de lecture. Le faisceau réfléchi est focalisé par une lentille 22 sur un dispositif photosensible 24, en passant à travers une analyseur de polarisation 26. Le signal électrique fourni par le dispositif photosensible dépend de la rotation de polarisation de la lumière, donc de la polarisation magnétique de la bande à chaque instant. Bien entendu, une très grande précision de positionnement relatif de ces éléments est nécessaire.

L'invention a pour but de rendre plus compacte et plus facile la construction d'un système de lecture magnéto-optique ayant de bonnes performances.

On a proposé également dans le brevet US-A-4 618 901 des dispositifs dans lesquels l'illumination d'une couche magnéto-optique est faite par l'intermédiaire d'un guide d'ondes optique.

On propose selon l'invention un système de lecture optique selon la revendication 1.

Par l'expression "plan d'incidence" d'un rayon lumineux, on entend le plan formé par ce rayon et la normale à la surface sur laquelle aboutit ce rayon; c'est alors aussi le plan défini par le rayon incident et le rayon réfléchi.

L'entrefer est allongé dans une direction qui est oblique ou perpendiculaire (mais non parallèle) à la direction de défilement relative entre le support magnétique (bande magnétique en principe) à lire et la tête.

Cette utilisation d'un guide d'onde correctement orienté par rapport à la direction d'allongement de l'entrefer permet d'aboutir à une tête particulièrement compacte et bénéficiant d'excellentes possibilités de lecture multipistes, d'une bonne sensibilité, et de facilités de construction très importantes sous forme de tête monolithique intégrée; en particulier, dans la version préférée de l'invention, les couches magnétiques et le guide d'onde optique peuvent être réalisés par dépôts de couches successives sur une même surface de tête et non pas sur des surfaces à 90° les unes des autres.

Dans la tête selon l'invention, il n'y a pas une tête de lecture et un système optique extérieur à la tête qui focalise avec plus ou moins de précision et de difficultés de réglage un faisceau d'éclairage sur la partie optiquement active de la tête, mais il y a un guide d'onde optique intégré à la tête, qui aboutit directement sur la partie optiquement active, celle-ci étant elle-même intégrée à la tête. Il n'y a donc aucun problème de réglage et de précision puisque le guide d'ondes fait partie de la tête (il est intégré par des techniques d'intégration monolithique en même temps que la partie optiquement active de la tête et de préférence sur le même côté).

Selon une autre caractéristique importante de l'invention, on peut prévoir qu'un capteur photosensible est disposé à moins de quelques micromètres de la zone optiquement active, sur le trajet du faisceau lumineux modulé par cette zone, de manière à recevoir directement ce faisceau, sans système de focalisation optique intermédiaire. Bien entendu, dans le cas où la lecture utilise la rotation de polarisation de la lumière, un analyseur de polarisation sera interposé sur le trajet du faisceau modulé, entre la partie optiquement active et le capteur photosensible.

Le capteur sera de préférence constitué par une barrette d'éléments photosensibles s'étendant dans une direction parallèle à la direction d'allongement de l'entrefer.

La construction d'une tête de lecture magnéto-optique selon l'invention peut être de type planaire ou non planaire. Dans la technique préférée qui est planaire, les couches magnétiques et les couches qui constituent des entrefers sont déposées sur une face plane parallèle à la surface contre laquelle défilera la bande magnétique à lire. Dans la technique non planaire, les couches magnétiques sont formées dans un substrat biseauté et la bande défile contre la pointe du biseau, obliquement ou perpendiculairement par rapport à la surface sur laquelle ont été déposées les couches magnétiques.

Dans une réalisation planaire particulière, on déposera les couches magnétiques et le guide d'ondes sur un substrat qui porte déjà un capteur photosensible. Il y a alors intégration monolithique totale de la tête de lecture, aussi bien pour l'éclairage que pour la modulation optique et pour la conversion opto-électronique.

Une possibilité de réalisation particulièrement avantageuse consiste à utiliser une technique de transfert de substrats : on réalise sur la face avant d'un premier substrat le circuit magnétique et le guide d'onde d'éclairage de la partie optiquement active, et sur la face avant d'un deuxième substrat l'analyseur et le capteur photosensible; on colle les deux substrats l'un contre l'autre par leurs faces avant; et on usine la face arrière du premier substrat jusqu'à faire apparaître en surface la partie de circuit magnétique contre laquelle doit défiler la bande magnétique.

De manière générale, le capteur photosensible sera une barrette linéaire de multiples éléments photosensibles, si on veut faire une lecture multipiste (autant d'éléments photosensibles que de pistes); le faisceau d'éclairage et le guide d'onde correspondant seront plats (quelques micromètres d'épaisseur pour une largeur correspondant de préférence à toute la largeur de la bande magnétique, mesurée perpendiculairement ou éventuellement en oblique par rapport à la direction de défilement). Le plan du guide plat est alors un plan parallèle à la direction d'allongement de l'entrefer.

Le faisceau d'éclairage peut être introduit dans le guide d'ondes soit par un système de lentilles (mais qui n'ont pas besoin d'une grande précision de focalisation), soit par une fibre optique ou une nappe de fibres optiques, soit par une diode laser collée directement contre la tête de lecture à un endroit où affleure une tranche du guide d'onde.

D'autres caractéristiques et avantages de l'invention apparaîtront à la lecture de la description détaillée qui est faite en référence aux dessins annexés dans lesquels :
- la figure 1, déjà décrite, représente le principe général d'une lecture magnéto-optique;
- la figure 2 représente une tête de lecture correspondante;
- la figure 3 représente une tête de lecture à guide d'onde optique selon l'invention;
- la figure 4 représente une tête de lecture avec capteur photosensible directement adjacent au substrat dans lequel on a réalisé la partie optiquement active de la tête de lecture.
- la figure 5 représente une tête de lecture avec un capteur photosensible directement intégré à la tête sans optique intermédiaire de focalisation.
- les figures 6a à 6g représentent les principales étapes de fabrication selon un premier mode de réalisation (technologie non planaire);
- les figures 7a à 7g représentent les étapes de fabrication pour un deuxième mode de réalisation (technologie planaire directe);
- les figures 8a à 8d représentent les étapes de fabrication pour un troisième mode de réalisation (technologie planaire avec transfert de substrat).

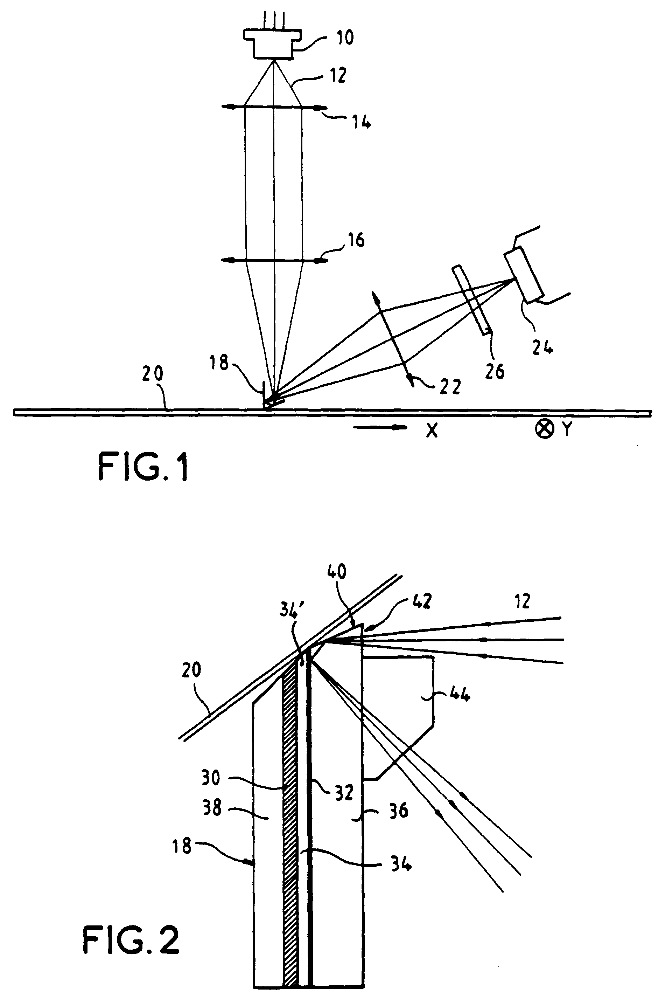

La figure 2 représente une tête de lecture magnéto-optique 18 qui a été proposée dans les laboratoires du Déposant. Cette tête est une tête non planaire dans laquelle on a formé un circuit magnétique à l'aide de deux bandes parallèles 30 et 32 de matériau magnétique (sendust). Ces deux bandes sont formées sur un substrat transparent 36; elles sont séparées par une couche non magnétique 34, et elles sont recouvertes par une couche de protection 38, par exemple en alumine.

La bande magnétique 20 défile contre une zone biseautée de la tête, à un endroit où affleurent les extrémités des deux couches de matériau magnétique 30 et 32. Elle défile donc contre une région d'entrefer 34' définie par l'extrémité de la couche non magnétique 34. De cette manière, la bande magnétique ferme d'un côté le circuit magnétique constitué par les deux couches de sendust 30 et 32. De l'autre côté, on peut considérer que le circuit magnétique est fermé à l'infini du fait de la grande longueur des couches 30 et 32 comparativement à la largeur de la couche non magnétique 34.

La couche 32 de matériau magnétique est très mince (quelques centaines d'angströms). La couche 30 est beaucoup plus épaisse (plusieurs milliers d'angströms au moins). C'est l'extrémité de la couche 32, à proximité immédiate de la région d'entrefer 34' donc de la bande magnétique, qui est la partie optiquement active du dispositif.

Le substrat 36 est transparent. Il comporte une face polie 40 à l'extrémité de la tête, à proximité immédiate de l'endroit où la bande magnétique qui porte les informations à lire vient fermer le circuit magnétique, et du côté de la couche mince 32.

Le faisceau laser 12 d'éclairage de la partie optiquement active est introduit dans le substrat transparent, par exemple par une face 42 parallèle au plan de la couche mince 32, il est totalement réfléchi par la face 40 vers la couche optiquement active 32, très près de l'extrémité de la tête, c'est-à-dire très près de la bande magnétique. Le faisceau est réfléchi avec une rotation de polarisation dépendant de la polarisation magnétique de la bande, et il ressort à travers le substrat transparent pour aller vers un capteur photosensible comme indiqué en référence à la figure 1. Des prismes tels que 44 peuvent être prévus pour permettre l'entrée ou la sortie du faisceau dans le substrat. Le sens du faisceau pourrait être inversé.

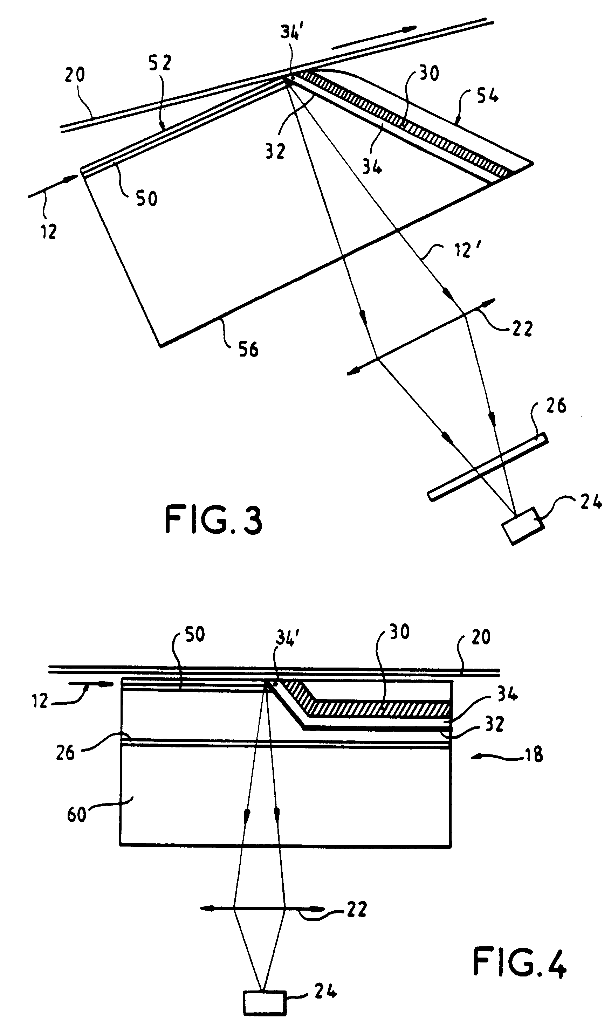

La tête de lecture selon l'invention est représentée à la figure 3, dans le cas d'une structure non planaire.

Elle comporte une partie optiquement active qui peut être de même nature que dans le cas de la figure 2 : sur un substrat transparent 56, deux couches magnétiques planes parallèles 30 et 32, séparées par une couche non magnétique 34, la couche optiquement active étant la couche très mince 32. La partie utile de l'entrefer est la région 34' qui est située à l'etrémité des couches 30 et 32, au voisinage immédiat de la bande magnétique. Cette partie utile 34' constitue un entrefer étroit et allongé, dans une direction qui est de préférence perpendiculaire au plan de la figure et qui est parallèle au plan du support magnétique qu'on veut lire.

L'éclairage de la couche optiquement active par le faisceau lumineux est fait grâce à un guide d'onde optique 50 de très faible épaisseur (de quelques centaines d'angströms à quelques micromètres) intégré au substrat 56. Le guide d'onde aboutit directement sur la partie optiquement active, c'est-à-dire à l'extrémité de la couche 32 très près de l'endroit où défile la bande magnétique 20. Et l'éclairage réalisé à l'aide de ce guide d'ondes est tel que le plan d'incidence des rayons lumineux sur l'extrémité de la couche mince 32 est perpendiculaire à la direction générale d'allongement de l'entrefer 34' à l'extrémité des couches 30 et 32.

Le guide d'onde est orienté en oblique par rapport au plan de la couche magnéto-optique 32 de sorte que le faisceau incident puisse se réfléchir sur celle-ci (avec modulation de polarisation dans le cas d'une couche qui agit sur la rotation du plan de polarisation de la lumière) et de sorte que le faisceau soit renvoyé dans une autre direction en vue d'être analysé.

En pratique par conséquent, la tête de lecture peut comporter deux faces principales obliques l'une par rapport à l'autre : la première face 52 est parallèle au guide d'onde qui est formé très près de la surface de cette première face; la deuxième face 54 est essentiellement parallèle au plan des couches 30 et 32 qui forment le circuit magnétique. Cette disposition avec deux faces obliques l'une par rapport à l'autre est liée au fait que la couche 32 est plane sur toute sa longueur. Comme on le verra plus loin, on peut envisager d'autres structures, dites planaires en raison de leur procédé de fabrication, dans lesquelles la couche 32 est plane sur presque toute sa longueur sauf justement dans la partie active éclairée par le faisceau laser.

Le guide d'onde optique de la tête selon l'invention sera en pratique un guide plat de très faible hauteur (quelques micromètres au plus) mais de grande largeur (quelques millimètres) pour pouvoir éclairer la couche 32 sur une largeur qui est la largeur totale de la bande magnétique à lire. Cette disposition n'est pas obligatoire, mais elle a évidemment l'avantage de permettre une lecture multipiste sur toute la largeur de la bande, à condition que le faisceau lumineux réfléchi soit analysé point par point sur toute sa largeur, par exemple par une barrette d'éléments photosensibles en nombre égal au nombre de pistes à lire.

Dans l'exemple schématique de réalisation de la figure 3, le faisceau réfléchi 12' émanant de la région optiquement active de la tête traverse le substrat 56 qui pour cette raison est transparent. Comme dans la réalisation de la figure 1, on peut prévoir que le faisceau 12' sort du substrat et est focalisé par une lentille 22 vers un capteur photosensible 24 en passant à travers un analyseur de polarisation 26.

Dans le cas d'un faisceau plat, pour la lecture multipiste, la lentille 22 est en principe une lentille cylindrique; elle focalise le faisceau, sous forme d'une bande linéaire étroite, sur le capteur qui est alors un capteur linéaire multipoint placé dans le plan de cette bande perpendiculairement à la direction du faisceau (perpendiculairement au plan de la figure 3).

Un exemple de réalisation de l'invention en structure planaire est représenté à la figure 4. L'appellation "planaire" est utilisée ici en raison du fait que la fabrication se fait par dépôts de couches différentes (optiques, magnétiques, isolantes, etc.) sur une seule surface plane d'un substrat. Paradoxalement, il faut cependant bien voir que la couche optiquement active 32 n'est plus plane comme aux figures précédentes mais elle présente un décrochement justement à l'endroit où elle est éclairée par un faisceau lumineux.

La tête de lecture comporte ici un substrat transparent 60 sur la surface duquel on forme les couches suivantes :
- facultativement une couche métallique gravée en réseau formant un analyseur de polarisation 26; en effet, le faisceau de retour va traverser le substrat perpendiculairement à sa surface supérieure et on peut donc l'analyser au cours de ce trajet; toutefois on pourrait prévoir que l'analyseur est situé ailleurs;
- les couches magnétiques 30 et 32 séparées par la couche non magnétique 34; la couche 32 active est au dessous; les couches 30 et 32 sont parallèles à la surface supérieure du substrat, sauf à leur extrémité où elles remontent obliquement jusqu'à la surface supérieure de la tête de telle manière que la bande magnétique à lire puisse refermer le circuit magnétique en passant devant les extrémités remontantes des couches 30 et 32 séparées par un entrefer;
- le guide optique 50, dans un plan parallèle à la surface supérieure du substrat et très près de la surface finale de la tête; ce guide se termine sur la partie remontante de la couche optiquement active 32; l'inclinaison de cette partie remontante est de préférence telle que le faisceau arrivant du guide d'onde soit réfléchi vers le bas par la partie remontante de la couche 32.

Le faisceau d'éclairage arrivant par le guide d'ondes plat parallèlement à la surface plane de la tête est donc réfléchi vers le bas, traverse le substrat 60 transparent, ressort à l'arrière par la face inférieure, et est renvoyé comme précédemment vers une optique de focalisation 22 et une barrette photosensible 24. L'analyseur 26, on le rappelle, est intégré de préférence dans la tête 18.

Là encore, le guide d'onde dirige des rayons lumineux sur la partie remontate de la couche 32 avec une incidence oblique, le plan d'incidence (plan contenant le rayon lumineux incident, le rayon réfléchi et la normale à la couche 32) est perpendiculaire à la direction générale d'allongement de l'entrefer, celle-ci étant en principe perpendiculaire au plan de la figure 4.

Cette réalisation est particulièrement avantageuse car elle permet une intégration monolithique très poussée de la tête, du fait que le guide optique et les couches magnétiques peuvent être formés par dépôts de couches sur une seule surface principale de la tête.

Selon une caractéristique particulièrement avantageuse de l'invention, on propose également de supprimer l'optique de focalisation 22 avec les problèmes de précision, de réglage et de coût qu'elle pose, en plaçant un capteur photosensible à proximité immédiate de la couche optiquement active, de manière que le faisceau modulé par la couche magnéto-optique n'ait pas la possibilité de diverger beaucoup avant d'atteindre les éléments photosensibles.

Cette particularité du mode de réalisation préféré selon l'invention est indépendante du fait que l'éclairage de la partie optiquement active soit fait ou non par un guide d'onde, mais elle est grandement facilitée par la présence du guide d'ondes.

Pour qu'un capteur puisse être utilisé sans optique de focalisation intermédiaire, alors que les pistes magnétiques à lire ne font guère que quelques micromètres de large, il est nécessaire que le capteur soit placé à une distance d'au plus quelques dizaines de micromètres de la zone active dans la direction de retour du faisceau lumineux réfléchi; sinon, la divergence naturelle du faisceau réfléchi par la couche optiquement active aboutirait très vite à un mélange des informations entre les pistes.

L'idée de l'invention est donc de placer les éléments photosensibles le long de la zone optiquement active, à moins de quelques dizaines de micromètres de celle-ci sur le trajet du faisceau réfléchi par cette zone.

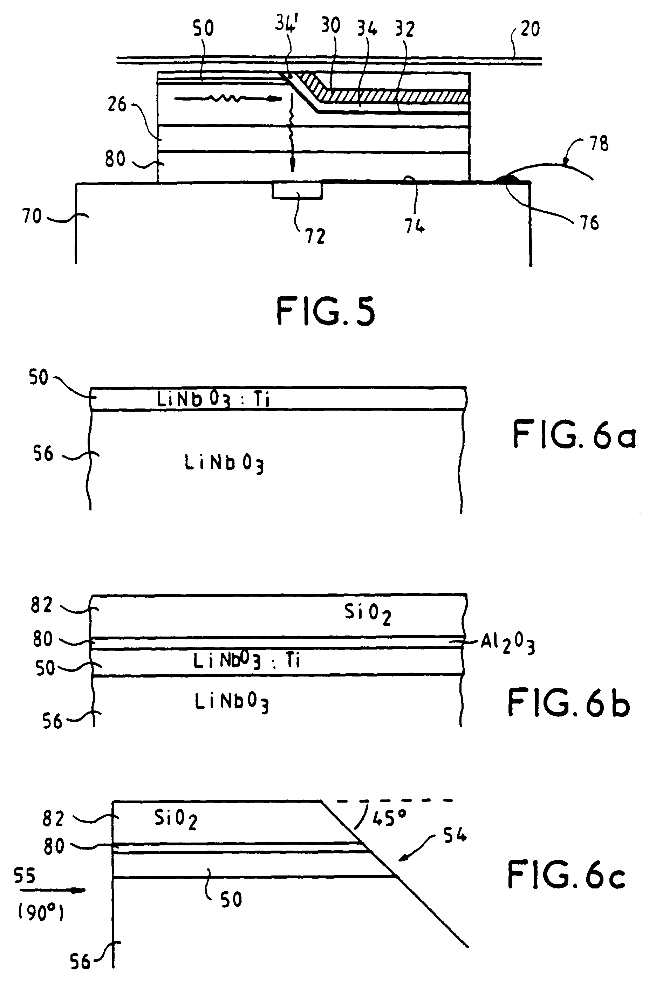

La figure 5 représente un exemple de réalisation de l'invention dans lequel les éléments photosensibles sont tout simplement intégrés dans le substrat qui porte la couche optiquement active.

Comme à la figure 4, on a intégré sur un même substrat 70 un guide d'onde optique 50 et les couches magnétiques 30 et 32 séparées par la couche non magnétique 34. La différence avec la figure 4 est le fait que le substrat de départ, sur lequel on a déposé la couche d'analyse de polarisation 26 puis les couches optiques et magnétiques, est un capteur photosensible dont les éléments photosensibles sont formés en surface.

Dans ce cas, la distance entre la partie active remontante de la couche 32 et les éléments photosensibles peut effectivement être inférieure à quelques micromètres.

Sur la figure 5 on a désigné par la référence 70 un substrat qui peut être une puce de silicium portant des éléments photosensibles 72 à sa surface supérieure. Les éléments photosensibles 72 sont connectés par des métallisations 74 à des plots de connexion extérieure 76. Des fils de connexion 78 peuvent être soudés à ces plots pour la transmission de signaux électriques à l'extérieur de la puce. Le transfert des charges générées dans les éléments photosensibles peut aussi se faire par des circuits MOS ou CCD (en terminologie anglo-saxonne "Metal Oxyde Semiconductor" et "Charge Coupled Device"). Sur le substrat est déposé une couche de planarisation transparente 80 (verre en suspension par exemple), puis la couche 26 servant d'analyseur de polarisation (c'est par exemple une couche métallique gravée en forme de grille à barreaux parallèles dans une seule direction). Ensuite sont formées les couches optiques et magnétiques par dépôts et gravures selon um procédé planaire que l'on détaillera plus loin.

Dans toutes les figures, on a représenté une coupe transversale dans un plan transversal à la largeur de la bande magnétique (et donc longitudinal par rapport au sens de défilement de la bande), ce qui ne fait pas apparaître par conséquent le fait que :
- le faisceau d'illumination est de préférence plat et s'étend sur toute la largeur de la bande magnétique;
- le guide d'ondes est également plat;
- les deux couches du circuit magnétique sont planes à leur extrémité proche de la bande magnétique et s'étendent sur toute la largeur de la bande; dans le cas de la figure 5, chacune des couches est coudée et a donc une forme de dièdre, avec un plan horizontal parallèle au plan du guide d'ondes et un plan qui remonte obliquement vers la surface de la tête pour couper le plan du guide d'ondes;
- le capteur photosensible comporte une multiplicité d'éléments photosensibles en ligne, également sur une distance égale à la largeur de la bande (ou une image de cette largeur dans le cas où l'optique 22 n'aurait pas un grandissement de 1).

Enfin, sur les figures on a représenté le plan oblique de remontée de la couche 32 comme un plan sensiblement à 45° du plan du guide d'ondes; mais si l'angle est différent, il faut prévoir en conséquence la position des éléments photosensibles pour que le faisceau lumineux soit bien réfléchi vers eux.

On va maintenant décrire en détail des possibilités de réalisation pratique de l'invention.

Dans un premier exemple (figures 6a à 6g), on cherche à réaliser une structure telle que celle de la figure 3.

On part par exemple d'un substrat de niobate de lithium 56 (figure 6a).

On dope superficiellement ce substrat sur sa face avant, sur une épaisseur pouvant aller de quelques centaines d'angströms à quelques micromètres, pour réaliser le guide d'ondes 50. Le dopant est du titane qui permet d'augmenter l'indice de réfraction.

On dépose ensuite (figure 6b) une couche dure 80, résistante à l'abrasion, par exemple en alumine Al₂O₃, ayant un indice de réfraction inférieur à celui du niobate dopé au titane pour délimiter l'épaisseur du guide. L'épaisseur de cette couche est faible (quelque milliers d'angströms par exemple), car c'est elle qui déterminera la proximité du guide d'ondes avec la surface supérieure finale de la tête. L'indice de réfraction de cette couche doit être plus faible que celui du guide d'onde 50 pour que ce dernier fonctionne bien comme un guide.

On dépose ensuite une couche intermédiaire de protection 82, par exemple en oxyde de silicium SiO ou SiO₂ de quelques micromètres d'épaisseur. Elle sera supprimée ultérieurement par abrasion.

On polit les faces du substrat 56 (figure 6c) de manière à définir la face 54, de préférence à 45° de la face supérieure sur laquelle on a formé le guide d'ondes. On polit de préférence à 90° la face 55 opposée à la face biseautée à 45°, de manière à définir un plan de référence perpendiculaire au plan du guide d'ondes. C'est par cette face 55 que sera introduit le faisceau d'éclairage. Les deux plans ainsi polis se coupent selon une ligne parallèle à la surface supérieure du substrat. L'angle formé par la face supérieure et la face à 45° est obtus.

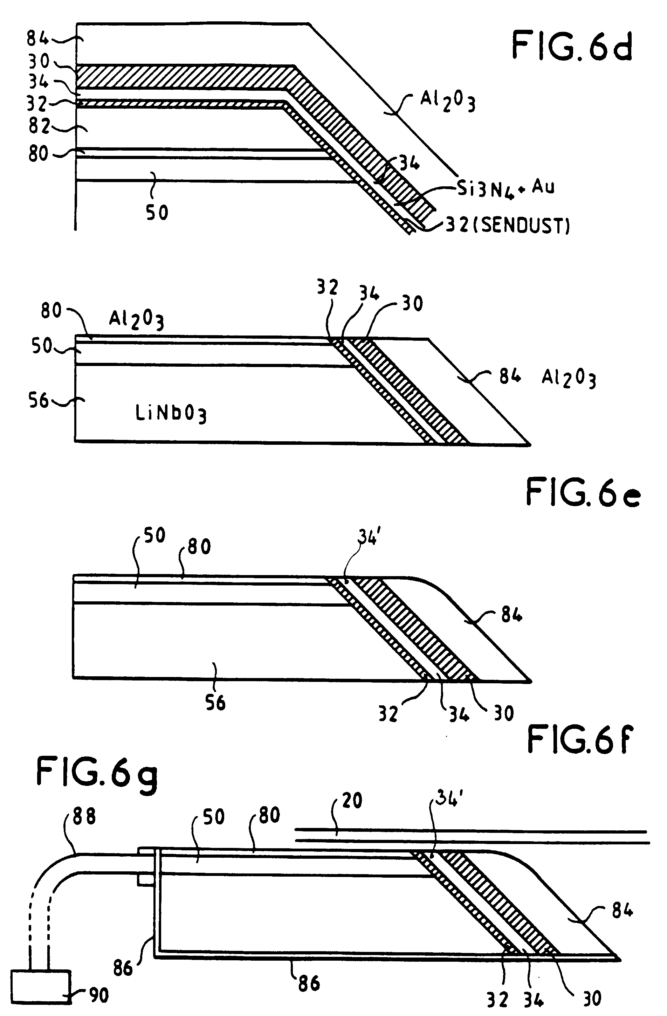

On dépose ensuite la première couche magnétique mince 32; ici c'est une couche de sendust d'environ 300 angströms d'épaisseur, qui se dépose uniformément sur la face supérieure et sur la face à 45°. figure 6d.

On recouvre cette couche d'une couche non magnétique 34, de préférence en nitrure de silicium; cette couche a une épaisseur de quelques milliers d'angströms et elle peut être recouverte d'une couche d'or de quelques centaines d'angströms (environ 700 angströms de préférence), l'ensemble de ces deux couches formant la couche d'entrefer 34.

Puis on dépose la deuxième couche magnétique 30. Comme les couches 32 et 34, la couche 30 se dépose à la fois sur la face supérieure et sur la face à 45° du substrat 56. La couche fait quelques milliers d'angströms, par exemple 5000 angströms.

Enfin, une couche de protection 84 en alumine peut être déposée (plusieurs micromètres d'épaisseur, par exemple 5 micromètres). Cette couche subsistera ultérieurement sur la face à 45° mais pas sur la face supérieure.

On érode alors mécaniquement la surface supérieure du substrat, selon un plan rigoureusement horizontal, d'abord avec un abrasif dur pour éliminer la couche de protection 84, puis avec un abrasif plus tendre pour éliminer la couche de silice.

Le polissage est arrêté lorsqu'on atteint la couche d'alumine 80. figure 6e.

On termine l'opération de polissage par un polissage avec bande abrasive pour réaliser un arrondi de quelques micromètres sur la couche extérieure d'alumine 84, car cette partie frottera sur la bande magnétique et ne doit pas l'user exagérément. figure 6f.

On dépose enfin une couche antiréfléchissante 86 sur la face inférieure du substrat, pour faciliter la sortie du faisceau réfléchi modulé, et également sur la face d'entrée 55 polie à 90°, pour faciliter l'entrée du faisceau d'éclairage.

Enfin, on colle une fibre optique 88 ou une nappe de fibres optiques contre la face d'entrée 55, en regard de la tranche du guide d'onde 50. Une diode laser 90 peut être placée à l'autre extrémité de la fibre. On pourrait aussi coller directement la diode laser contre la face 55 en regard du guide d'onde. figure 6g.

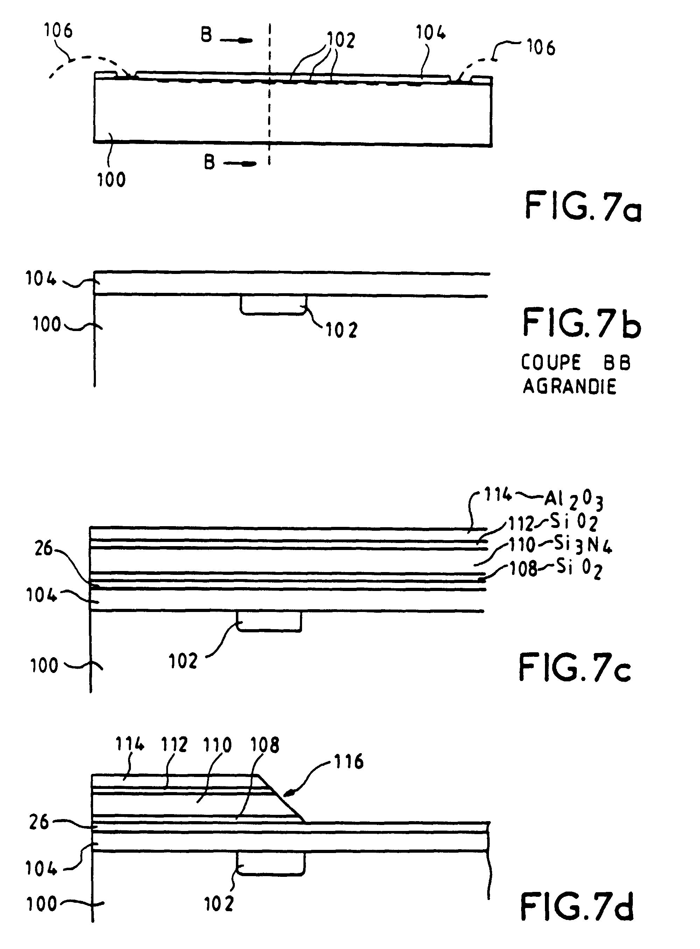

Une autre technique de réalisation est représentée aux figures 7a à 7g.

Il s'agit là d'une technique planaire, c'est-à-dire qu'on n'effectue des dépôts que sur la face supérieure d'un substrat.

Deux possibilités sont envisageables comme cela a été expliqué précédemment : dépôt du guide d'ondes et des couches magnétiques sur un substrat transparent, ou, plus avantageusement, dépôt sur la face supérieure d'un capteur photosensible du côté photosensible.

On va décrire ce deuxième cas; toutefois on ne décrira pas la réalisation du capteur lui-même qui est une puce de silicium portant une barrette linéaire classique, par exemple une barrette de 16 à 256 points photosensibles en ligne, s'étendant par exemple sur 8 millimètres au total, c'est-à-dire la largeur d'une bande magnétique.

La figure 7a représente schématiquement la barrette 100, avec ses éléments photosensibles 102, selon une vue transversale le long de la barrette. On rappelle que la barrette sera alignée dans un plan parallèle à la bande magnétique et en principe (mais pas obligatoirement) transversalement à la direction de défilement de celle-ci.

La barrette est recouverte d'une couche de planarisation 104, par exemple en silice ou nitrure de silicium; elle est reliée électriquement à l'extérieur par des connexions 106 qui permettront de recueillir des signaux représentant la modulation du faisceau d'éclairage par la couche magnéto-optique. Les connexions sont représentées en pointillés car elles ne seront soudées qu'en fin de fabrication.

La figure 7b représente une coupe dans l'autre sens, c'est-à-dire transversalement à l'alignement des éléments photosensibles de la barrette, selon la ligne BB de la figure 7a. Les dimensions sont cependant considérablement agrandies pour montrer le détail de la suite du procédé de fabrication. Un élément photosensible 102 est représenté sous forme symbolique, par un rectangle. La position relative des éléments photosensibles par rapport à la couche magnéto-optique est évidemment importante.

Sur la couche de planarisation 104, on forme la couche d'analyseur de polarisation optique 26, qui est un dépôt métallique suivi d'une gravure définissant des ouvertures en lignes parallèles. figure 7c.

On dépose ensuite une couche transparente plane 108 d'indice de réfraction faible (par exemple de l'oxyde de silicium). Elle sert essentiellement, à délimiter le plan inférieur du guide d'onde. Elle peut être très mince ou plus épaisse selon les besoins.

On dépose ensuite une couche transparente 110 d'indice de réfraction plus fort (par exemple du nitrure de silicium), qui définit le guide d'ondes proprement dit. Son épaisseur est de quelques centaines d'angströms à quelques micromètres.

Puis, une couche transparente 112 d'indice de réfraction faible est déposée pour délimiter le plan supérieur du guide d'ondes. Cela peut être de l'oxyde de silicium. Son épaisseur est mince afin que le guide d'ondes reste à proximité immédiate de la face supérieure finale de la tête de lecture.

Une couche 114 résistante à l'abrasion, par exemple de l'alumine sur quelques milliers d'angströms, est déposée. La couche 114 et la couche 112 pourraient être confondues si les indices de réfraction s'y prêtent.

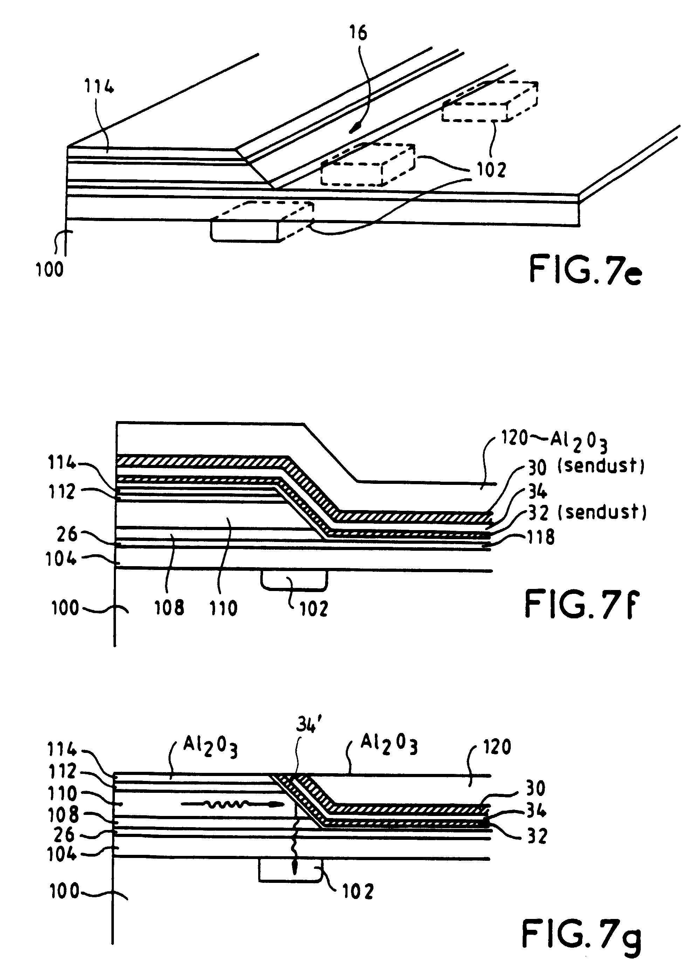

On usine alors, soit mécaniquement, soit par d'autres moyens (attaque directive oblique, laser, etc.) une marche oblique 116 dans la superposition de couches ainsi créées. La marche est creusée au moins sur toute l'épaisseur des couches 110 à 114. Elle s'étend sur toute la longueur de la tête dans le sens transversal au défilement de la bande, au dessus de l'alignement d'éléments photosensibles. figure 7d; figure 7e en perspective.

L'oblicité du flanc de la marche est de préférence de 45° pour qu'un rayonnement horizontal issu du guide d'ondes soit réfléchi verticalement vers le bas. Si l'oblicité est différente, le fonctionnement reste possible mais la position de la marche doit être prévue en conséquence pour que le faisceau réfléchi arrive bien sur les éléments photosensibles 102.

On dépose alors d'abord une couche d'adaptation d'indice optique 118 qui vient recouvrir les deux surfaces horizontales décalées de la face supérieure du substrat et également le flanc oblique de la marche. Cette couche n'est utile que sur le flanc de la marche mais elle peut subsister sans inconvénient sur les surfaces horizontales. Elle a pour rôle de faciliter la sortie du faisceau d'éclairage par la tranche oblique du guide d'ondes.

Puis on dépose successivement une première couche de matériau magnétique (sendust) 32, très fine, une couche amagnétique 34, de quelques milliers d'angströms, et une autre couche de matériau magnétique plus épaisse 30.

Enfin, on dépose une couche dure 120, résistante à l'abrasion, par exemple en alumine. figure 7f.

L'étape suivante consiste à éroder mécaniquement la surface supérieure horizontale du substrat sur une profondeur suffisante pour supprimer les couches magnétiques sur la partie haute de la marche 16, tout en laissant ces couches sur la partie basse et en laissant également sur cette partie basse une épaisseur de couche 120 qui servira à protéger les couches magnétiques contre une usure par la bande magnétique.

En pratique, on arrête l'érosion quand on atteint la couche 114 au dessus du guide d'ondes 110. Le guide d'onde est donc également protégé contre l'usure. figure 7g.

Comme précédemment on prévoit par exemple de coller une fibre optique ou mieux un nappe de fibres optiques, ou directement un ruban de diodes laser, à l'extrémité affleurante du guide d'onde 110, sur le côté de la tête. La sortie de signal électrique se fait sur les connexions 106 mentionnées en référence à la figure 7a.

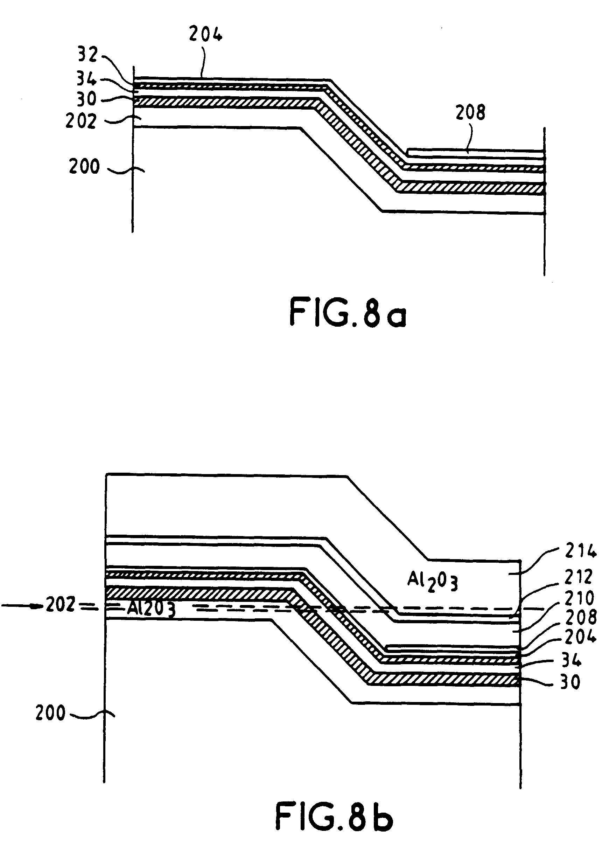

Une autre technique de réalisation intéressante est décrite en référence aux figures 8a à 8d.

C'est encore une technique planaire, mais utilisant un transfert de substrat.

On part d'un premier substrat 200 qui n'a pas besoin d'être transparent, sur lequel on usine chimiquement ou mécaniquement une marche oblique (à 45° si possible).

On dépose une couche résistante à l'abrasion 202; puis une première couche magnétique 30, une couche d'entrefer 34, et une couche magnétique très mince 32.

Puis on dépose de préférence une couche transparente 204, d'adaptation optique, qui facilitera ultérieurement la sortie du faisceau d'éclairage du guide d'onde vers la couche magnétique mince 32.

On dépose alors une couche transparente 208 qui sera une des parois du guide d'onde optique et qui doit donc avoir un indice de réfraction faible. Puis on élimine sélectivement cette couche 208 sur le flanc oblique de la marche pour ne la laisser subsister que sur les surfaces horizontales. Cette élimination est nécessaire pour que le faisceau d'éclairage puisse atteindre la couche magnéto-optique 32. figure 8a.

On dépose alors (figure 8b) successivement la couche 210 formant le guide d'onde proprement dit, d'indice de réfraction plus élevé que la couche 208, une autre couche 212 d'indice plus faible, similaire à la couche 208 et formant l'autre face plane du guide d'onde; puis une couche 214 de protection, par exemple en alumine, en principe aussi haute que la marche oblique.

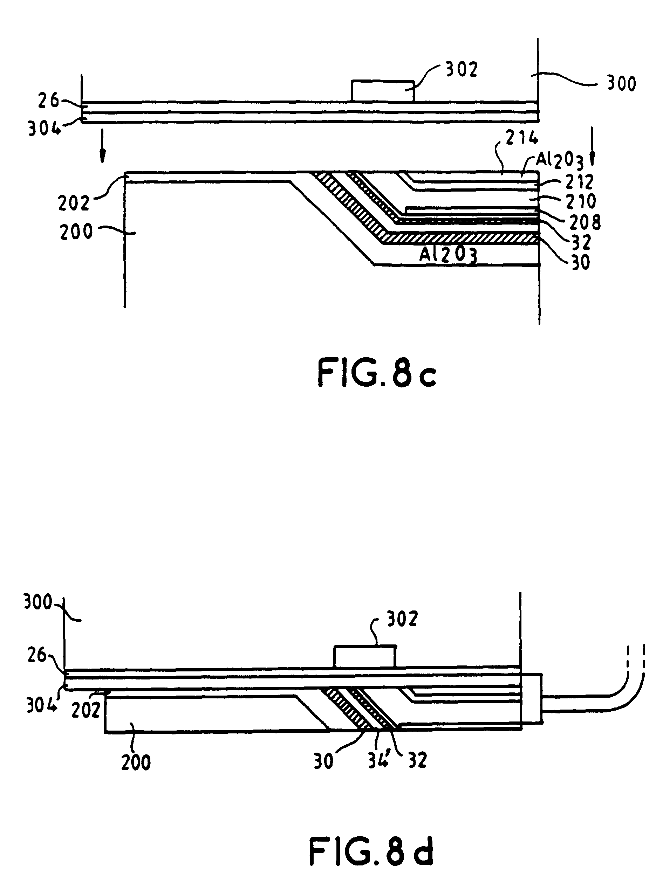

On érode alors le substrat par sa face supérieure, jusqu'à la couche 202 sur le haut de la marche. On crée ainsi (figure 8c) une surface plane où affleure la partie remontante à 45° du circuit magnétique. Le plan du guide d'ondes est très proche (quelques micromètres, si possible moins) de la face supérieure érodée.

On colle cette face érodée contre la face plane d'un capteur photosensible (en principe une barrette linéaire d'éléments photosensibles 302 formée sur un substrat 300). Le capteur photosensible est de préférence recouvert d'une couche 26 d'analyseur de polarisation optique et d'une couche de planarisation 304. Le positionnement relatif des deux substrats 200 et 300 est bien entendu fait de telle sorte que le faisceau lumineux de sortie modulé par réflexion sur la couche mince 32 débouche en face des éléments photosensibles 302.

On érode alors le substrat 200 par sa face arrière jusqu'à le faire disparaître presque complètement; le polissage est arrêté lorsqu'on atteint la couche 208 qui délimite le guide d'ondes. La partie remontante du circuit magnétique 30,32, 34 affleure alors sur la face arrière de ce qui reste du substrat 200. Cette partie affleurante sera en regard de la bande magnétique.

Là encore, le faisceau peut être introduit par une fibre ou une nappe de fibres optiques collée sur la tranche du substrat en face du débouché du guide optique. (figure 8d).

Toute la description qui précède a été faire en supposant que la partie optiquement active de la tête de lecture est réfléchissante et que le faisceau modulé est le faisceau réfléchi. Toutefois, l'effet magnéto-optique existe aussi en transmission si la couche magnéto-optique est suffisamment mince et l'invention peut être transposée à ce cas.

## Revendications

1. Système de lecture optique qui comporte une tête de lecture pour lire des informations magnétiques inscrites sur un support magnétique (20) mobile par rapport à la tête, la tête comportant un circuit magnétique ouvert (30, 32, 34') avec une région d'entrefer (34') destinée à être placée à proximité immédiate du support à lire pour moduler le circuit magnétique en fonction des informations magnétiques du support, cette région d'entrefer étant étroite et allongée dans une direction dite direction d'allongement, le circuit magnétique comportant également une couche magnétique optiquement active (32) placée dans le circuit magnétique à proximité immédiate de la région d'entrefer (34'), la couche étant apte à recevoir et moduler un faisceau lumineux en fonction des informations magnétiques inscrites sur le support, le système comportant une source lumineuse pour émettre ce faisceau et un capteur photosensible pour recevoir le faisceau après modulation par la couche, la tête de lecture comportant en outre un guide d'onde optique (50) intégré à la tête, aboutissant directement sur la couche magnétique optiquement active, la tête de lecture étant caractérisée en ce que le guide d'onde est plat et dirige sur la couche optiquement active, le long de l'entrefer et à proximité immédiate de celui-ci, un faisceau lumineux plat dont le plan est parallèle à la direction d'allongement de l'entrefer, le plan d'incidence d'un rayon lumineux guidé par ce guide et aboutissant sur la couche optiquement active étant perpendiculaire à la direction d'allongement de la région d'entrefer.

2. Système selon la revendication 1, caractérisé en ce que la région d'entrefer est allongée dans une direction perpendiculaire à une direction de défilement relative entre le support magnétique à lire et la tête.

3. Système selon l'une des revendications précédentes, caractérisé en ce que le guide optique plat dirige un faisceau d'éclairage plat, de largeur beaucoup plus grande que sa hauteur, sur une zone optiquement active dont la largeur s'étend sur toute la largeur d'une bande magnétique constituant le dit support magnétique, la bande portant plusieurs pistes parallèles d'informations magnétiques, de manière à lire toutes les pistes en parallèle, et dont la hauteur est d'au plus quelques micromètres.

4. Système selon l'une des revendications précédentes, caractérisé en ce que le capteur photosensible est une barrette photosensible linéaire comportant autant d'éléments à lire que de pistes magnétiques parallèles enregistrées sur une bande magnétique à lire.

5. Système selon l'une des revendications 1 à 4, caractérisé en ce que le capteur photosensible (70, 72) est intégré dans la tête et est placé à moins de quelques dizaines de micromètres de la couche optiquement active, sur le trajet du faisceau modulé par cette couche.

6. Système de lecture optique d'informations selon l'une des revendications précédentes, caractérisé en ce que le guide d'ondes et le circuit magnétique sont formés de couches minces déposées sur une seule surface principale de la tête.

## Claims

1. Optical reading system which includes a read head for reading magnetic information recorded on a magnetic medium (20) which can move with respect to the head, the head comprising an open magnetic circuit (30, 32, 34') with a gap region (34') intended to be placed immediately next to the medium to be read so as to modulate the magnetic circuit as a function of the magnetic information of the medium, this gap region being narrow and elongated in a direction termed the direction of elongation, the magnetic circuit also including an optically active magnetic layer (32) placed in the magnetic circuit immediately next to the gap region (34'), the layer being able to receive and modulate a light beam as a function of the magnetic information recorded on the medium, the system including a light source for emitting this beam and a photosensitive sensor for receiving the beam after modulation by the layer, the read head furthermore including an optical waveguide (50) incorporated with the head, terminating directly on the optically active magnetic layer, the read head being characterized in that the waveguide is flat and directs onto the optically active layer, along the gap and immediately next to the latter, a flat light beam whose plane is parallel to the direction of elongation of the gap, the plane of incidence of a light ray guided by this guide and terminating on the optically active layer being perpendicular to the direction of elongation of the gap region.

2. System according to Claim 1, characterized in that the gap region is elongated in a direction perpendicular to a direction of relative movement between the magnetic medium to be read and the head.

3. System according to one of the preceding claims, characterized in that the flat optical guide directs a flat illumination beam, of much greater width than its height, onto an optically active zone whose width extends over the whole width of a magnetic tape constituting the said magnetic medium, the tape carrying several parallel tracks of magnetic information, in such a way as to read all the tracks in parallel, and whose height is at most a few micrometres.

4. System according to one of the preceding claims, characterized in that the photosensitive sensor is a linear photosensitive array containing as many elements to be read as there are parallel magnetic tracks recorded on a magnetic tape to be read.

5. System according to one of Claims 1 to 4, characterized in that the photosensitive sensor (70, 72) is incorporated in the head and is placed less than a few tens of micrometres from the optically active layer, in the path of the beam modulated by this layer.

6. Optical information reading system according to one of the preceding claims, characterized in that the waveguide and the magnetic circuit are formed of thin layers deposited on a single main surface of the head.

## Patentansprüche

1. Lesesystem mit einem Lesekopf, um auf einem bezüglich des Kopfes beweglichen Magnetträger (20) aufgezeichnete magnetische Informationen zu lesen, wobei der Kopf einen offenen Magnetkreis (30, 32, 34') mit einer Magnetspaltzone (34') aufweist, die in unmittelbarer Nähe des zu lesenden magnetischen Trägers liegen soll, um den Magnetkreis abhängig von den magnetischen Informationen des Trägers zu modulieren, wobei die Magnetspaltzone schmal entlang einer sogenannten Längsrichtung verläuft und der Magnetkreis weiter eine optisch aktive magnetische Schicht (32) besitzt, die im Magnetkreis in unmittelbarer Nähe der Magnetspaltzone (34') liegt und einen Lichtstrahl empfangen und abhängig von den auf dem Träger eingeschriebenen magnetischen Informationen modulieren kann, wobei das System eine Lichtquelle, die diesen Strahl aussendet, und einen lichtempfindlichen Sensor aufweist, um den Strahl nach der Modulation durch die Schicht zu empfangen, wobei der Lesekopf weiter einen in den Kopf integrierten Lichtwellenleiter (50) besitzt, der unmittelbar an die optisch aktive magnetische Schicht anstößt, dadurch gekennzeichnet, daß der Lichtwellenleiter flach ist und einen flachen Lichtstrahl, dessen Ebene parallel zur Längsrichtung des Magnetspalts verläuft, entlang des Magnetspalts und in unmittelbarer Nähe dieses Spalts auf die optisch aktive Schicht richtet, wobei die Ebene, in der ein von diesem Lichtwellenleiter geführter Lichtstrahl auf die optisch aktive Schicht fällt, senkrecht zur Längserstreckung der Magnetspaltzone verläuft.

2. System nach Anspruch 1, dadurch gekennzeichnet, daß die Magnetspaltzone in einer Richtung senkrecht zur relativen Laufrichtung zwischen dem zu lesenden magnetischen Träger und dem Kopf verläuft.

3. System nach einem der vorstehenden Ansprüche, dadurch gekennzeichnet, daß der flache Lichtwellenleiter einen flachen Beleuchtungsstrahl, dessen Breite wesentlich größer als seine Höhe ist, auf eine optisch aktive Zone richtet, deren Breite sich über die ganze Breite eines den magnetischen Träger bildenden Magnetbands erstreckt, wobei das Band mehrere parallele magnetische Informationsspuren besitzt, sodaß alle Spuren parallel gelesen werden, deren Höhe höchstens einige Mikrometer beträgt.

4. System nach einem der vorstehenden Ansprüche, dadurch gekennzeichnet, daß der lichtempfindliche Sensor eine lineare lichtempfindliche Leiste mit ebenso vielen lichtempfindlichen Leseelementen ist, wie parallele Magnetspuren auf einem zu lesenden Magnetband registriert sind.

5. System nach einem der Ansprüche 1 bis 4, dadurch gekennzeichnet, daß der lichtempfindliche Sensor (70, 72) in den Kopf integriert ist und höchstens einige 10 Mikrometer von der optisch aktiven Schicht im Verlauf des durch diese Schicht modulierten Strahl entfernt liegt.

6. System zum optischen Lesen von Informationen gemäß einem der vorstehenden Ansprüche, dadurch gekennzeichnet, daß der Lichtwellenleiter und der Magnetkreis aus dünnen Schichten gebildet werden, die auf eine einzige Hauptseite des Kopfes aufgebracht sind.
